# FASCICULE DE BREVET EUROPEEN

(11) **EP 2 504 199 B1**
(45) Date de publication et mention de la délivrance du brevet: **11.09.2013**
(21) Numéro de dépôt: 10752060.3
(22) Date de dépôt: 21.07.2010
(51) Int. Cl.: B60P 7/08

(54) **DISPOSITIF TENSIONNEUR DE SANGLES.**
GURTSTRAFFERVORRICHTUNG
BELT TENSIONING DEVICE

(30) Priorité: 25.11.2009 FR 0958340
(43) Date de publication de la demande: 03.10.2012
(73) Titulaire: Joubert Productions, 63600 Ambert (FR)
(72) Inventeur: JOUBERT, Thierry, F-63600 Ambert (FR); JOUBERT, Xavier, F-63600 Ambert (FR)
(74) Mandataire: Vuillermoz, Bruno
(86) Numéro de dépôt international: PCT/FR2010/051534
(87) Numéro de publication internationale: WO 2011/064477

(56) Documents cités:
- EP-A1- 1 151 687
- WO-A1-89/08603
- US-B1- 7 503 736

## Description

### DOMAINE DE L'INVENTION

L'invention concerne un dispositif tensionneur de sangles ou de courroies, mieux connu sous l'expression anglo-saxonne « *ratchet* ».

Un tel dispositif est classiquement mis en oeuvre pour assurer la tension de sangles, notamment au niveau de galeries de véhicules automobiles, porte-bagages, et de manière générale, dès lors qu'il convient d'assurer la tension d'une sangle en vue de la fixation d'un article, d'un bagage ou toute sorte de produit.

### ETAT ANTERIEUR DE LATECHNIQUE

Les systèmes *« ratchet* » sont aujourd'hui d'un usage largement répandu pour assurer la tension de sangles. Pour l'essentiel, ils se composent traditionnellement d'une base solidarisée à l'extrémité d'une sangle, ladite base comportant un axe sur lequel est monté un tambour rotatif autour duquel est destinée à venir s'enrouler l'autre extrémité de la sangle, voire une autre sangle. Ce tambour est mu en rotation au moyen d'un levier, qualifié de levier de mise sous tension, actionnant en rotation le tambour pour permettre l'enroulement de ladite autre extrémité de la sangle sur celui-ci, et ainsi assurer la tension de la sangle. L'axe du tambour est muni de roues dentées destinées à coopérer avec des cliquets de retenue montés sur la base, et de cliquets d'entraînement montés sur le levier de mise sous tension, pour assurer respectivement le maintien sous tension de la sangle et l'entraînement du tambour lorsque le levier de mise sous tension est actionné.

L'une des difficultés majeures de ce genre de dispositif réside dans la libération de la tension, lorsque l'on souhaite libérer le produit fixé. En effet, afin d'aboutir à une telle libération de la rotation du tambour, les dispositifs de l'art antérieur sont essentiellement munis d'un levier de déverrouillage solidaire du levier de mise sous tension, qu'il convient tout d'abord d'actionner en traction, pour libérer le tambour du cliquet d'entrainement. Corollairement, il faut également ouvrir complètement, c'est-à-dire, écarter de la base le levier de mise sous tension jusqu'à sa position extrême, afin de libérer le tambour du cliquet de retenue. Cette dernière étape n'est pas évidente, et sauf à découvrir l'astuce, peu d'utilisateurs sont en mesure de libérer correctement ledit tambour. Ce faisant, cette double opération pose difficulté en raison justement de la tension s'exerçant sur ledit tambour lorsque la sangle est tendue.

Le document US 7503736 révèle le préambule de la revendication 1.

L'objectif visé par la présente invention est de simplifier cette opération de déverrouillage.

### EXPOSE DE L'INVENTION

A cet effet, l'invention vise un dispositif tensionneur de sangles comprenant :
- une base, à l'une des extrémités de laquelle est solidarisée l'extrémité d'une sangle, et recevant à son autre extrémité, un tambour rotatif recevant l'extrémité de ladite sangle ou d'une autre sangle, ledit tambour étant solidarisées à deux roues dentées, aptes à coopérer avec un cliquet de retenue engrenant par défaut dans lesdites roues dentées sous l'action d'un moyen de rappel élastique, et susceptible de coulisser au sein de la base ;
- un levier de mise sous tension, monté rotatif par articulation sur le tambour, et muni d'un cliquet d'entraînement desdites roues dentées, engrenant par défaut dans lesdites roues dentées sous l'action d'un organe de rappel élastique, susceptible de coulisser au sein dudit levier ;
- un levier de déverrouillage, apte à libérer les roues dentées de leur coopération respectivement avec le cliquet de retenue et avec le cliquet d'entraînement.

Selon l'invention, le levier de déverrouillage est monté rotatif par articulation sur le tambour, de manière indépendante à la rotation du levier de mise sous tension.

En outre, il est solidarisé à deux cames parallèles de même profil, aptes à coopérer simultanément respectivement avec le cliquet de retenue et le cliquet d'entraînement, afin de libérer la rotation du tambour.

En d'autres termes, l'invention consiste principalement à dissocier les fonctions de tension et de libération de tension, ce que les dispositifs de l'art antérieur ne proposaient pas. En effet, en dissociant ces deux fonctions, on facilite l'opération de libération de la tension par un simple mouvement rotatif exercé sur un levier de déverrouillage, indépendamment de toute action sur le levier de mise sous tension.

En raison de la présence de cames, dont le profil est adapté, on libère la coopération des cliquets de retenue et d'entraînement de manière simple et sans effort, libérant dès lors la rotation du tambour et corolairement, autorisant la sangle soumise à tension à se détendre.

Selon une caractéristique avantageuse de l'invention, l'extrémité de la sangle fixée à la base est montée sur un axe d'enroulement et de stockage de ladite sangle, dont la rotation est assurée au moyen d'une manivelle. Ce faisant, lorsque cela est requis, il est devient possible de stocker une longueur importante de sangle, typiquement pouvant atteindre cinq mètres, puisqu'aussi bien celle-ci n'est pas stockée sur l'axe de mise sous tension, mais selon un axe indépendant.

### BREVE DESCRIPTION DES FIGURES

La manière dont l'invention peut être réalisée et les avantages qui en découlent, ressortiront mieux de l'exemple de réalisation qui suit, donné à titre indicatif et non limitatif, à l'appui des figures annexées.
La figure 1 est une représentation schématique en perspective du dispositif tensionneur conforme à l'invention, en position fermée.
La figure 2 est une vue analogue à la figure 1 dans laquelle le levier de déverrouillage est en position opérationnelle de déverrouillage.
La figure 3 est une vue schématique en perspective illustrant en détail les cames associées au levier de déverrouillage.
La figure 4 est une vue analogue à la figure 1 d'un autre mode de réalisation de l'invention, en position fermée, dont la figure 5 est une vue en position de tension et les figures 6 et 7 des vues illustrant le stockage d'une sangle.
La figure 8 est une vue en éclaté du mode de réalisation des figures 4 à 7.

### DESCRIPTION DETAILLEE DE L'INVENTION

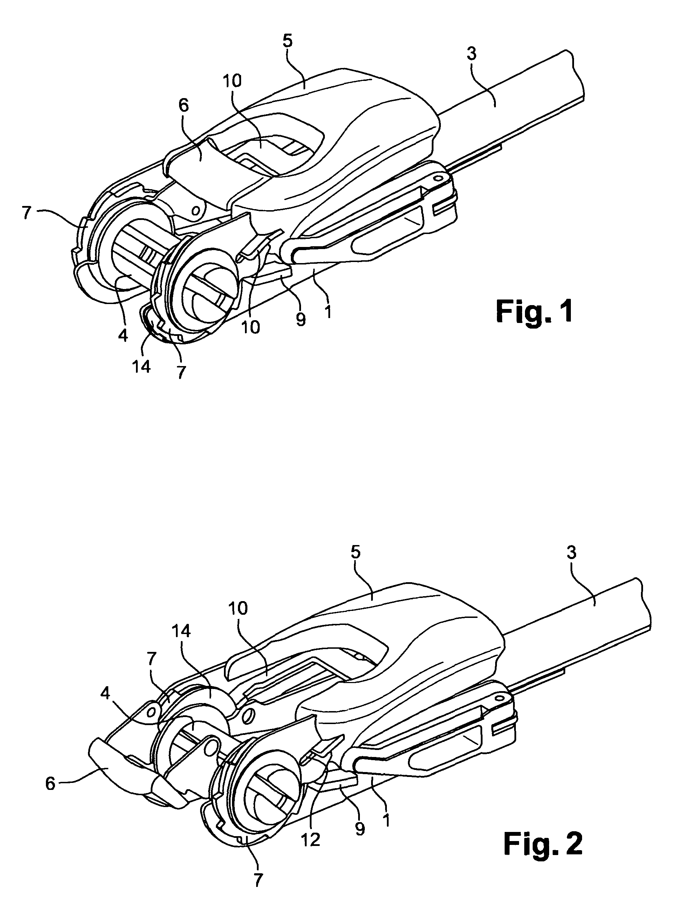

On a donc représenté en relation avec la figure 1 une vue en perspective schématique du dispositif tensionneur de l'invention.

Fondamentalement, celui-ci se compose d'une base **1,** dont l'une des extrémités est solidarisée à l'extrémité **3** d'une sangle. En l'espèce, l'extrémité de ladite sangle est cousue sur elle-même autour d'un axe (non représenté) de la base **1.**

La base **1** est constituée de deux faces latérales parallèles **18, 19** solidarisées entre elles par une plaque de liaison **20,** munie d'un point d'application **21** d'un organe de rappel élastique évoqué ci-après plus en détail.

Les extrémités des faces latérales parallèles **18, 19** de la base **1,** opposées au lieu de solidarisation de la sangle **3** définissent deux flasques également parallèles **22, 23,** pourvu d'un alésage central **24,** et définissant en outre chacun un berceau de réception sensiblement semi-circulaire **25,** externe par rapport auxdits flasques.

L'alésage central **24** des deux flasques **22, 23** est destiné à recevoir, à l'instar d'un pallier, un tambour rotatif **4,** au niveau duquel est destinée à s'enrouler l'autre extrémité de la sangle **3,** voire une autre sangle. Ce tambour **4** est constitué de deux demi-axes **26, 27** de section transversale sensiblement semi-circulaire, séparé l'un de l'autre de par leur coopération respective avec deux roues dentées latérales **7** et **8,** percée chacune de deux orifices **28, 29** de forme correspondante. Les deux demi-axes **26, 27** sont solidarisé en translation par deux axes pliés **30,** ou éventuellement par matage ou boutrolage des extrémités desdits demi-axes.

En revanche, en l'absence de contrainte, le tambour **4** est monté fou en rotation, et est donc susceptible de tourner dans un sens ou dans l'autre.

Les deux roues dentées latérales **7** et **8** sont solidaires du tambour **4,** ainsi qu'on l'aura bien compris au vu de la description qui précède.

Les dents desdites roues sont profilées de telle sorte à favoriser la rotation du tambour dans un sens et au contraire, s'opposer à sa rotation dans l'autre sens, de par la coopération desdites dents avec d'une part, un cliquet de retenue **9,** ménagé au sein de la base **1,** et d'autre part, un cliquet d'entraînement **10,** ménagé au sein d'un levier de tension **5,** décrit plus en détail ultérieurement.

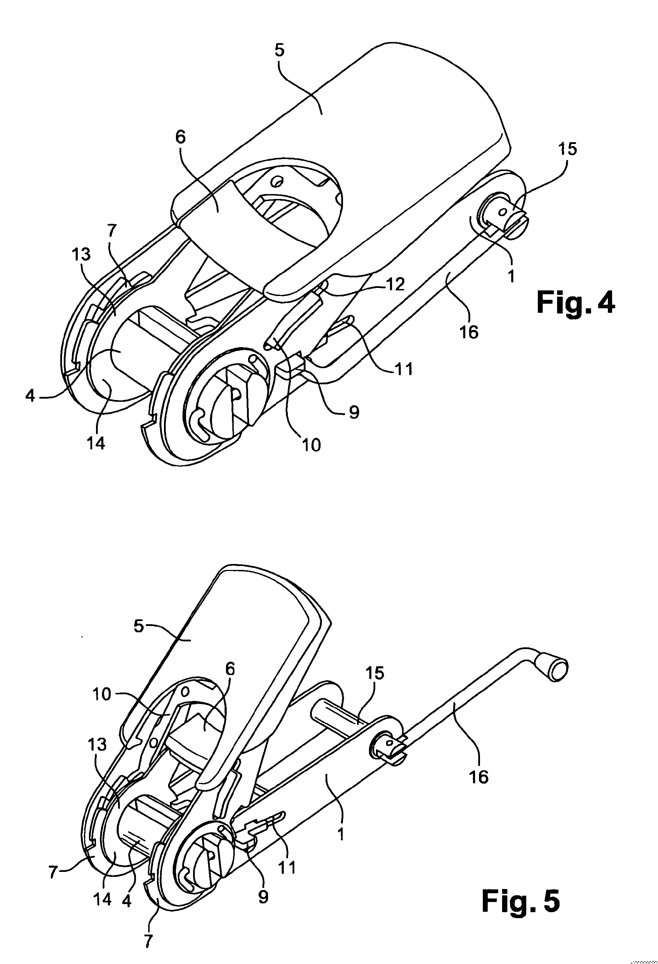

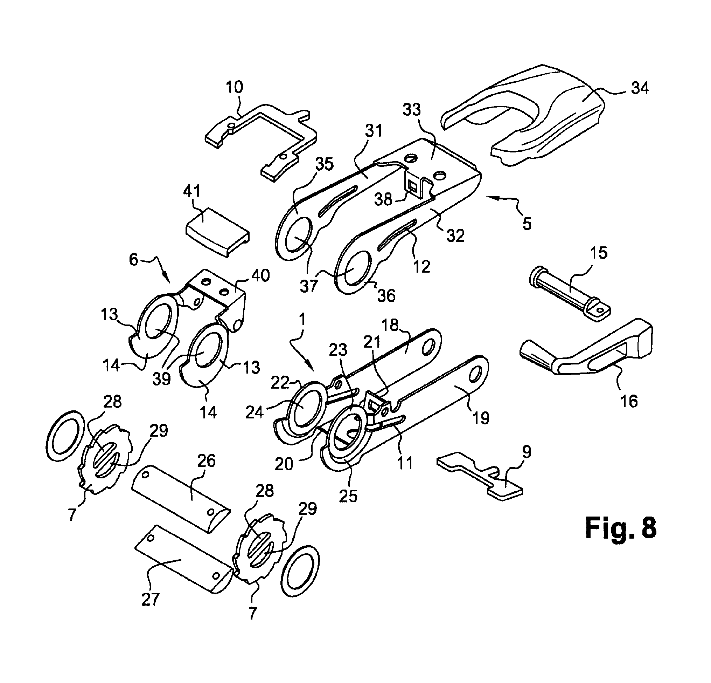

Plus précisément, le cliquet de retenue **9** est constitué d'une lame rigide, par exemple métallique, dont deux excroissances latérales sont susceptibles de coulisser chacune dans une lumière traversante **11** mieux visible au sein de la figure 5 ou de la figure 8, et ménagée dans les faces latérales **18, 19** de la base **1.** Le mouvement du cliquet est purement translatif. Il est soumis en permanence à l'action d'un organe de rappel élastique, typiquement constitué d'un ressort (non représenté), prenant appui sur la saillie **21** émanant de la plaque de liaison **20** desdites faces latérales de la base **1,** et induisant la poussée du cliquet 9 contre les dents des roues dentées **7.**

Le dispositif comprend comme déjà dit un levier de mise sous tension **5,** qui vient s'articuler sur le tambour **4.** Ce levier est constitué d'une structure rigide comportant deux faces latérales parallèles **31, 32,** solidarisées entre elles au moyen d'une plaque postérieure **33,** susceptible de recevoir par clipsage une zone de préhension **34.** L'extrémité des faces latérales opposée à la zone de préhension défmissent deux flasques également parallèles **35, 36,** pourvu chacun d'un alésage central **37,** dont le diamètre interne correspond sensiblement au diamètre externe du tambour **4.** Ce dernier constitue donc l'axe d'articulation du levier de mise sous tension.

Ce levier **5,** comme déjà dit, comporte un cliquet d'entraînement **10,** qui à l'instar du cliquet de retenue **9,** est également constitué d'une lame métallique, donc rigide, pourvue de deux excroissances latérales, susceptibles de se déplacer chacune dans une lumière traversante **12** ménagée au sein des faces latérales **31, 32** dudit levier. Comme le cliquet de retenue **9,** le cliquet d'entrainement **10** est soumis à l'action d'un organe de rappel élastique, en l'espèce constitué d'un ressort (non représenté), prenant appui sur une saillie **38** émanant de la plaque postérieure **33** (voir figure 8), afin d'induire une poussée permanente dudit cliquet d'entraînement sur les dents des roues dentées 7.

En d'autres termes, et tel qu'on peut l'observer par exemple sur la figure 5, les deux cliquets, respectivement de retenue **9** et d'entraînement **10,** sont en permanence en prise ou, en d'autres termes, engrènent avec les dents des roues dentées **7** en raison des actions respectives des ressorts auxquels ils sont soumis. Ce faisant, en raison de l'orientation particulière desdites dents, lesdits cliquets s'opposent à la rotation du tambour **4** dans un sens particulier, et en l'espèce, selon l'illustration des figures, dans le sens des aiguilles d'une montre.

En revanche, toujours en raison de l'orientation ou du profil particulier desdites dents, cette coopération des cliquets **9** et **10** avec les dents ne s'oppose pas à la rotation dudit tambour dans le sens opposé, à savoir sur les figures dans le sens trigonométrique.

Ce faisant, lorsqu'un utilisateur souhaite procéder à la mise sous tension d'une sangle, il actionne le levier **5** de manière régulière qui, par le biais du cliquet d'entraînement **10,** induit la rotation du tambour **4.** Le rabat du levier **5** contre la base **1** pour procéder à une nouvelle rotation du tambour afin d'aboutir à la tension souhaitée, n'altère pas la tension préalablement obtenue en raison de la coopération du cliquet de retenue **9** avec les roues dentées **7,** maintenant le tambour dans la position dans laquelle il se trouvait lors de l'actionnement précédente du levier de mise sous tension **5.**

Selon l'invention, le dispositif tensionneur de sangles comprend également un levier de déverrouillage **6** décrit ci-après plus en détail.

Ce levier de déverrouillage **6** est lui aussi articulé sur le tambour **4.** Selon une caractéristique de l'invention, le levier de déverrouillage **6** est actionnable de manière totalement indépendante du levier d'entraînement **5.**

Ce levier de déverrouillage **6** comporte deux flasques latéraux **13** percés en leur centre d'un alésage **39,** dont le diamètre interne correspond sensiblement au diamètre externe du tambour **4.** Les deux flasques sont solidarisés l'un à l'autre par une plaque **40,** susceptible de recevoir par clipsage une zone de préhension **41.**

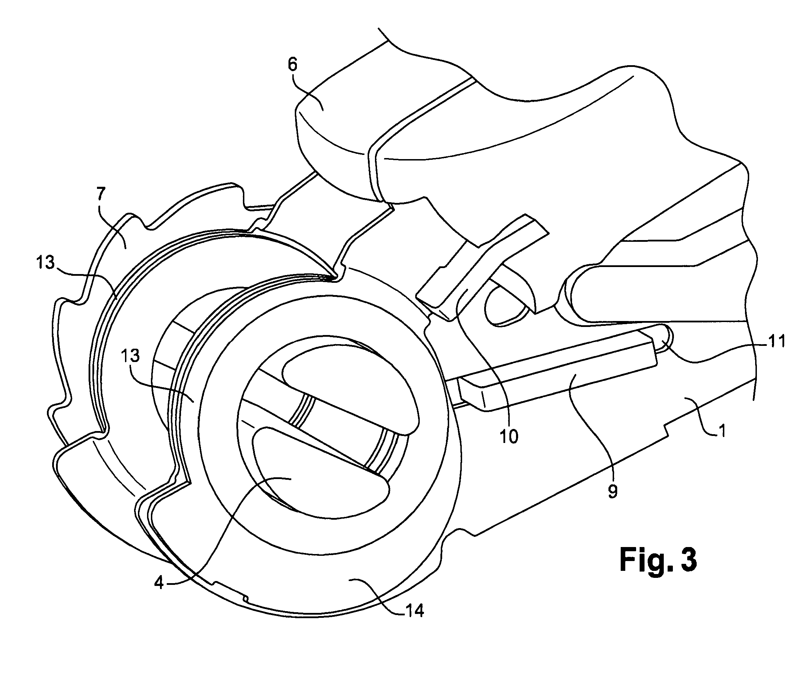

La périphérie de chacun des flasques **13** se prolonge par une excroissance formant came **14,** à largeur progressive, la progressivité de la largeur des cames étant orientée également dans le sens trigonométrique sur la figure 3.

Il résulte de ces explications outre des différentes figures, que la base **1,** le levier de mise sous tension 5 et le levier de déverrouillage **6** sont imbriqués les uns dans les autres. La rotation de ces différents éléments les uns par rapport aux autres s'effectue donc par rapport à l'axe de rotation du tambour **4.**

Ainsi qu'on peut bien l'observer sur la figure 3, les cames **14** sont destinées à coopérer avec respectivement le cliquet de retenue **9** de la base **1,** et le cliquet d'entraînement **10** du levier de mise sous tension **5.** Ce faisant, lorsque le levier de déverrouillage **6** est actionné, en l'espèce comme illustré sur la figure 2, les cames poussent les deux cliquets **9** et **10,** ces derniers coulissant au sein de leurs lumières respectives, les libérant de leur coopération avec les roues dentées **7.** Le tambour **4** se retrouve alors libre en rotation et permet ainsi déverrouiller la tension préalablement assurée par le dispositif tensionneur de l'invention.

On conçoit de fait l'extrême simplicité de libération de la tension imprimée à la ou aux sangles à l'aide du dispositif de l'invention, de par le simple actionnement de ce levier de déverrouillage, les cames qui lui sont associées jouant le rôle de démultiplicateur de puissance.

Lorsque l'on souhaite à nouveau procéder à la mise sous tension de la ou des sangles, il suffit alors de rabaisser le levier de déverrouillage **6** en direction de la base **1,** comme illustré au sein des figures 1, 4 à 6, pour supprimer la coopération des cames **14** avec l'extrémité des cliquets de retenue et d'entrainement, de sorte que ceux-ci coopèrent à nouveau avec les roues dentées 7, et limitent la rotation du tambour **4** dans le seul sens de la tension.

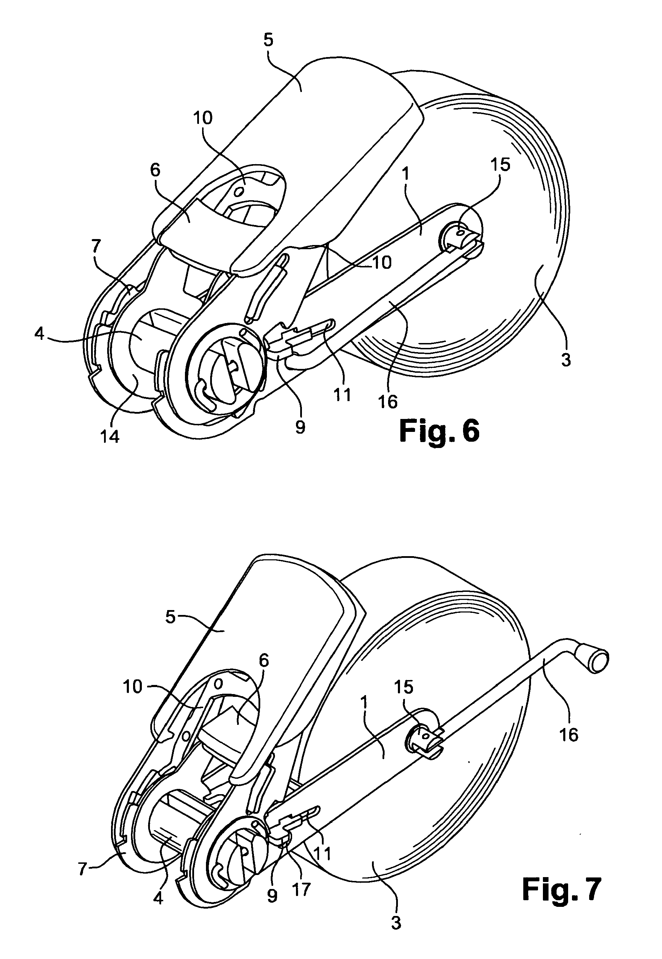

Avantageusement, la solidarisation de la sangle **3** à la base **1** est assurée sur un axe rotatif **15,** reçu au sein des faces latérales **18, 19,** actionnable manuellement par une manivelle **16,** articulée au niveau de l'une des extrémités dudit axe. Ce faisant, il est possible de stocker la sangle **3** sur cet axe, à l'instar de ce qui est représenté en figures 6 et 7, et non pas sur l'axe assurant la tension, en l'espèce le tambour **4.**

On facilite ainsi le stockage de la sangle sur le dispositif tensionneur de l'invention, puisqu'aussi bien notamment en raison du relatif éloignement de l'axe de stockage 15 du reste du dispositif, il est typiquement possible de stocker quelques cinq mètres de longueur de sangle, ce que les dispositifs de l'art antérieur ne permettent pas d'obtenir.

Au demeurant, la manivelle **16** peut être bloquée contre la base **1** lorsqu'elle n'est pas utilisée, par insertion de son extrémité libre au sein d'une lumière traversante **17,** ménagée sur l'une des parois latérales de ladite base **1.**

On conçoit tout l'intérêt du dispositif de l'invention, qui permet de faciliter l'usage d'un tel organe tensionneur, sans effort conséquent, en toute sécurité.

## Revendications

1. Dispositif tensionneur de sangles comprenant :
- une base (1), à l'une des extrémités de laquelle est solidarisée l'extrémité d'une sangle (3), et recevant à son autre extrémité, un tambour rotatif (4) recevant l'extrémité de ladite sangle ou d'une autre sangle, ledit tambour (4) étant solidarisé à des roues dentées (7), aptes à coopérer avec un cliquet de retenue (9) engrenant par défaut dans lesdites roues dentées (7) sous l'action d'un organe de rappel élastique, et susceptible de coulisser au sein de la base ;
- un levier de mise sous tension (5), monté rotatif par articulation sur le tambour (4), et muni d'un cliquet d'entraînement (10) desdites roues dentées (7), engrenant par défaut dans lesdites roues dentées sous l'action d'un organe de rappel élastique, et susceptible de coulisser au sein dudit levier ;
- un levier de déverrouillage (6), apte à libérer les roues dentées (7) de leur coopération respectivement avec le cliquet de retenue (9) et avec le cliquet d'entraînement (10),
***caractérisé :***
• en ce que le levier de déverrouillage (6) est monté rotatif par articulation sur le tambour (4), de manière indépendante à la rotation du levier de mise sous tension (5) ;
• en ce qu'il est solidarisé à deux cames parallèles (14) de même profil, aptes à coopérer simultanément respectivement avec le cliquet de retenue (9) et avec le cliquet d'entraînement (10), afin de libérer la rotation du tambour (4).

2. Dispositif tensionneur de sangles selon la revendication 1, ***caractérisé* en ce que** l'extrémité de la sangle fixée à la base est montée sur un axe d'enroulement et de stockage (15) de ladite sangle (3), dont la rotation est assurée au moyen d'une manivelle (16).

3. Dispositif tensionneur de sangles selon la revendication 2, ***caractérisé* en ce que** la manivelle (16) est articulée au niveau de l'une des extrémités de l'axe d'enroulement et de stockage (15), et est susceptible d'être bloquée contre la base (1) lorsqu'elle n'est pas utilisée, par insertion de son extrémité libre au sein d'une lumière traversante (17), ménagée sur l'une des faces latérales de ladite base.

## Patentansprüche

1. Gurtstraffervorrichtung, Folgendes umfassend:
- eine Basis (1), an deren einem Ende das Ende eines Gurts (3) befestigt ist, und die an ihrem anderen Ende eine Drehtrommel (4) aufnimmt, die das Ende des Gurts oder eines anderen Gurts aufnimmt, wobei die Trommel (4) mit Zahnrädern (7) verbunden ist, die mit einer Rückhalteklinke (9) zusammenzuwirken in der Lage ist, welche unter der Wirkung eines elastischen Rückstellelements voreingestellt in die Zahnräder (7) eingreift und im Inneren der Basis gleiten kann;
- einen Spannhebel (5), der durch Anlenkung an der Trommel (4) drehbeweglich angebracht und mit einer Mitnahmeklinke (10) für die Zahnräder (7) versehen ist, die voreingestellt unter der Wirkung eines elastischen Rückstellelements in die Zahnräder eingreift und im Inneren des Hebels gleiten kann;
- einen Entriegelungshebel (6), der in der Lage ist, die Zahnräder (7) aus ihrem jeweiligen Zusammenwirken mit der Rückhalteklinke (9) und der Mitnahmeklinke (10) zu befreien,
**dadurch gekennzeichnet:**
• dass der Entriegelungshebel (6) unabhängig von der Drehung des Spannhebels (5) durch Anlenkung an der Trommel (4) drehbeweglich angebracht ist;
• dass er mit zwei parallelen Nocken (14) gleichen Profils verbunden ist, die in der Lage sind, jeweils gleichzeitig mit der Rückhalteklinke (9) und der Mitnahmeklinke (10) zusammenzuwirken, um die Drehung der Trommel (4) freizugeben.

2. Gurtstraffervorrichtung nach Anspruch 1, **dadurch gekennzeichnet, dass** das an der Basis befestigte Ende des Gurts an einer Aufroll- und Lagerungsachse (15) des Gurts (3) angebracht ist, deren Drehung mittels einer Kurbel (16) sichergestellt wird.

3. Gurtstraffervorrichtung nach Anspruch 2, **dadurch gekennzeichnet, dass** die Kurbel (16) im Bereich eines der Enden der Aufroll- und Lagerungsachse (15) angelenkt ist und bei Nichtgebrauch durch Einstecken ihres freien Endes in eine an einer der Seitenflächen der Basis ausgebildete Durchgangsöffnung (17) an der Basis (1) arretiert werden kann.

## Claims

1. A strap-tensioning device including:
- a base (1), to one of the ends of which is rigidly connected the end of a strap (3), and receiving, at its other end, a rotatable drum (4) receiving the end of said strap or another strap, said drum (4) being rigidly connected to toothed wheels (7), capable of engaging with a holding pawl (9) meshing by default in said toothed wheels (7) under the action of a resilient return member, and able to slide in the base;
- a tensioning lever (5), rotatably mounted by hinging onto the drum (4), and provided with a pawl (10) for driving said toothed wheels (7), meshing by default in said toothed wheels under the action of a resilient return member, and able to slide in said lever;
- an unlocking lever (6), capable of releasing the toothed wheels (7) from the respective engagement thereof with the holding pawl (9) and with the driving pawl (10),
***characterised:***
• in that the unlocking lever (6) is rotatably mounted, independently of the rotation of the tensioning lever (5), by hinging onto the drum (4);
• in that it is rigidly connected to two parallel cams (14) having the same profile and capable of simultaneously engaging, respectively, with the holding pawl (9) and with the driving pawl (10), so as to release the rotation of the drum (4).

2. The strap-tensioning device as claimed in claim 1, ***characterised* in that** the end of the strap secured to the base is mounted on an axis (15) for winding and storing said strap (3), which is rotated by means of a crank (16).

3. The strap-tensioning device as claimed in claim 2, ***characterised* in that** the crank (16) is hinged on one of the ends of the winding and storage axis (15), and is able to be locked against the base (1) when it is not in use, by inserting its free end into a through aperture (17), provided on one of the lateral surfaces of said base.
